# EUROPEAN PATENT APPLICATION

(11) **EP 1 582 956 A2**
(43) Date of publication of application: **05.10.2005**
(21) Application number: 05006908.7
(22) Date of filing: 30.03.2005
(51) Int. Cl.: G05B 19/425, B25J 9/16, B25J 13/02

(54) **Manual operating unit for robot**

(30) Priority: 31.03.2004 JP 2004104537
(71) Applicant: FANUC LTD, Yamanashi 401-0597 (JP)
(72) Inventor: Nihei, Ryo, Fujiyoshida-shi Yamanashi 403-0005 (JP); Kinoshita, Satoshi, Minamitsuru-gun Yamanashi 401-0511 (JP); Yasamura, Mitsuhiro, Minamitsuru-gun Yamanashi 401-0302 (JP); Yamashiro, Hikaru, Fuefuki-shi Yamanashi 406-0834 (JP)
(74) Representative: Schmidt, Steffen J.

(57) **Abstract**

A manual operating unit for operating a robot in a manual mode, for the purpose of a teaching operation, a start/stop operation, or the like. The manual operating unit includes a housing; a robot diagram provided on the housing for schematically showing an external appearance of a robot mechanical section; an index provided on the housing in association with the robot diagram for representing a plurality of directions of motions to be performed by the robot mechanical section under control; and a motion command section provided on the housing in association with the index for causing the robot mechanical section to perform the motions in the directions represented by the index. For example, the index includes a drawing illustrating three coordinate axes of a three-axis rectangular coordinate system provided for the robot mechanical section. In this arrangement, the motion command section includes a plurality of motion command keys for causing the robot mechanical section to perform the motions along the three coordinate axes illustrated by the drawing.

## Description

### BACKGROUND OF THE INVENTION

### 1. Field of the Invention

The present invention relates to a manual operating unit used for a manual-mode operation of an industrial robot.

### 2. Description of the Related Art

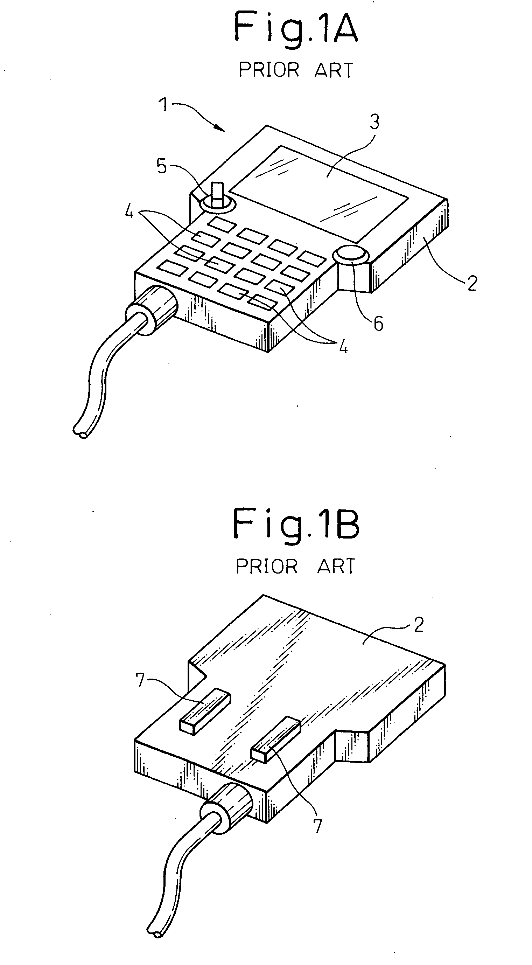

In the field of an industrial robot (hereinafter generally referred to as a "robot"), it has been known that, in a case where a robot arm is to be operated in a manual mode for the purpose of teaching a start/stop operation or the like, a manual operating unit connected to a robot controller is used to perform a keying operation. Figs. 1A and 1B show, respectively, the external appearances of front and back sides of a conventional and typical portable manual operating unit 1. As shown in the drawings, the manual operating unit 1 is provided on the front side of a housing 2 with a display 3, a plurality of operation keys 4, an enable switch 5 and an emergency shutdown switch 6, and on the back side of the housing 2 with a dead man's switch 7.

The display 3 functions to display the coordinate of a current position of the robot on a screen, or to display an operation program and/or the status of an external input/output signal on the screen. The plural operation keys 4 are used for entering a motion command to the robot, editing a program, setting the external I/O signals, or the like. The enable switch 5 functions to change the state of the operating function of the manual operating unit 1 from valid to invalid and vice versa. The emergency shutdown switch 6 and the dead man's switch 7 function to halt the motion of the robot in case of emergency.

When the robot is operated using the manual operating unit 1, an operator holds the manual operating unit 1 in his hand, turns the enable switch 5 to ON (i.e., the valid state of an operating function) with fingers placed on the dead man's switch 7, and operates the operation keys 4 while imaging a coordinate system preset for the robot, so as to cause the robot to perform an intended action.

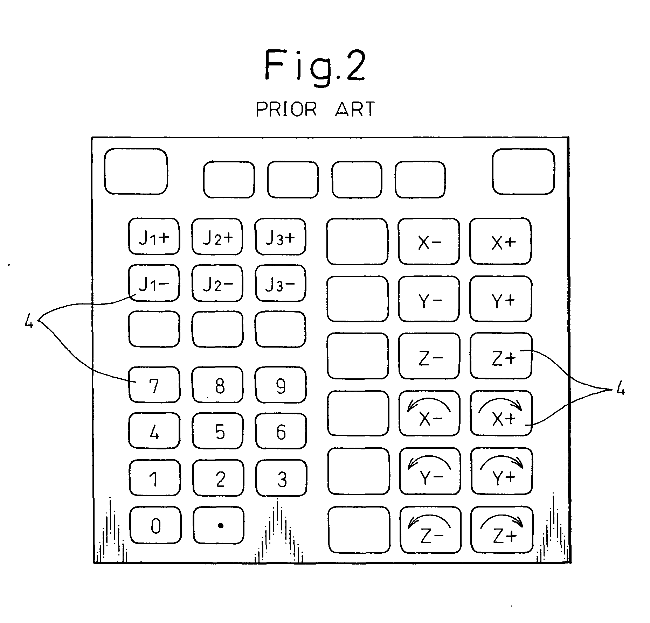

Fig. 2 shows a typical conventional array of the operation keys 4. In the illustrated example, the plural operation keys 4 include motion command keys for causing the robot to perform, with respect to the plural coordinate axes of a coordinate system set for the robot, a translational motion along each coordinate axis and a rotational motion about each coordinate axis. In a case where plural coordinate systems are set for the robot, a desired one of the coordinate systems may be designated by operating a specified key.

For example, when the robot is to be operated on a desired coordinate system, it is possible to command a jog-feed motion in a "+X" axis direction in the coordinate system, a jog feed motion in a "-Y" axis direction in the coordinate system and a jog feed motion about a "Z" axis in the coordinate system (a right-hand screw rotation as seen from an origin), by operating, respectively, a "X+" key, a "Y-" key and a "Z" key with an arcuate arrow. Also, when the robot is to be operated with respect to control axes, it is possible to select and operate a key denoted by a control-axis name and a "+" or "-" sign (J1+, J1-, J2+, J2-, ···).

However, a significant skill is required for the operator to rapidly execute the manual mode operation of the robot in accordance with the operator's intention by using the above-described conventional manual operating unit. This is because it is generally difficult to properly image the invisible coordinate system, and because an extremely careful key operation is required to avoid a situation where the distal end portion of a robot arm or a tool such as a hand attached thereto collides with surrounding equipment due to a key operation error.

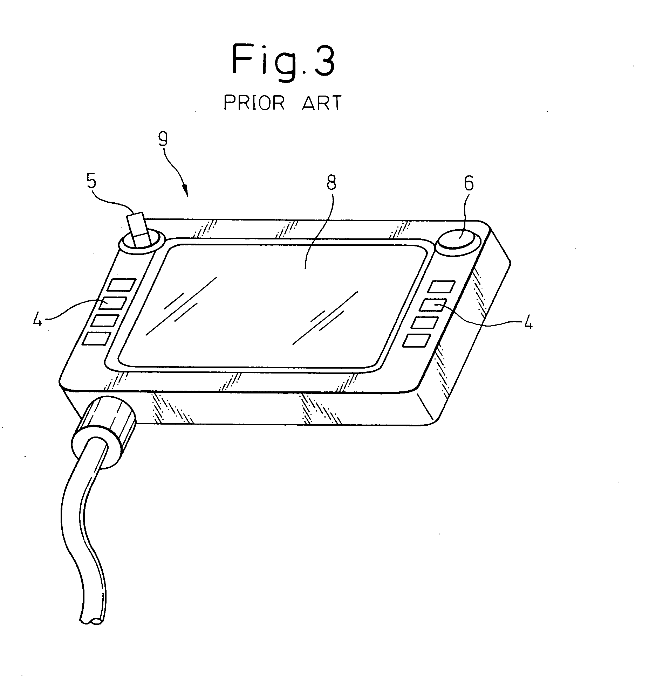

Recently, in place of the keying-operation type manual operating unit as described above, a manual operating unit 9, as shown in Fig. 3, is proposed, which includes a display section 8 provided with a touch panel, and in which a robot is operated by pushing a desired point of a diagram of the robot shown in the display section 8 with a finger or the like with the aid of the observation of the diagram. The manual operating unit 9 also includes operation keys 4 having an input function different from a motion command input by operating the touch panel of the display 8, an enable switch 5, an emergency shutdown switch 6 and a dead man's switch (not shown, arranged on the back side).

If the manual operating unit 9 is used, a robot can perform a motion in a direction designated by a touching operation with a finger or the like on the display section 8. The touch panel has, however, an unsatisfactory durability and reliability, and also is unsatisfactory in terms of a reliable and safe operation because a simultaneous touching operation on plural points are processed as an input by a touching operation at a quite different point. Further, it is required that the display section 8 is provided with a sufficiently large touch panel in order to facilitate an accurate input operation, which may lead to a problem in terms of manufacturing cost.

### SUMMARY OF THE INVENTION

It is an object of the present invention to overcome the above-described problems associated with a conventional manual operating unit for a robot, and to provide a manual operating unit which is inexpensive and easy to be operated, and which permits a non-skilled operator to easily operate a robot.

In order to accomplish the above objects, the present invention provides a manual operating unit for a robot, comprising a housing; a robot diagram provided on the housing, the robot diagram schematically showing an external appearance of a robot mechanical section; an index provided on the housing in association with the robot diagram, the index representing a plurality of directions of motions to be performed by the robot mechanical section under control; and a motion command section provided on the housing in association with the index, the motion command section causing the robot mechanical section to perform the motions in the directions represented by the index.

In the above-described manual operating unit, the index may comprise a drawing illustrating three coordinate axes of a three-axis rectangular coordinate system provided for the robot mechanical section; and the motion command section may comprise a plurality of motion command keys for causing the robot mechanical section to perform the motions along the three coordinate axes illustrated by the drawing.

Alternatively, the index may comprise a drawing illustrating directions of motions in a plurality of control axes provided for the robot mechanical section; and the motion command section may comprise a plurality of motion command keys for causing the robot mechanical section to perform the motions along the plurality of control axes illustrated by the drawing.

The above-described manual operating unit may further comprise a display section provided on the housing independently of the motion command section and an operation key provided on the housing independently of the motion command section and the display section.

Also, the above-described manual operating unit may further comprise at least one of an enable switch, an emergency shutdown switch and a dead man's switch, which are provided on the housing independently of the motion command section.

### BRIEF DESCRIPTION OF THE DRAWINGS

The above and other objects, features and advantages of the present invention will become more apparent from the following description of preferred embodiments in connection with the accompanying drawings, wherein:
Fig. 1A is a perspective view illustrating a schematic form of a conventional manual operating unit and showing a front side external appearance;
Fig. 1B is a perspective view showing a back-side external appearance of the manual operating unit of Fig. 1A;
Fig. 2 is a plan view showing an array of operation keys provided in the manual operating unit of Fig. 1A;
Fig. 3 is a perspective view illustrating a schematic form of a conventional manual operating unit having a touch panel;
Fig. 4 is an illustration schematically showing an entire configuration of a robot system including a manual operating unit according to an embodiment of the present invention;
Fig. 5A is a perspective view illustrating a schematic form of a manual operating unit according to an embodiment of the present invention and showing a front side external appearance;
Fig. 5B is a perspective view showing a back side external appearance of the manual operating unit of Fig. 5A; and
Figs. 6A to 6C are schematic plan views showing various examples of combination of a robot diagram, an index and motion command keys.

### DETAILED DESCRIPTION

The embodiments of the present invention are described below in detail, with reference to the accompanying drawings. In the drawings, the same or similar components are denoted by common reference numerals.

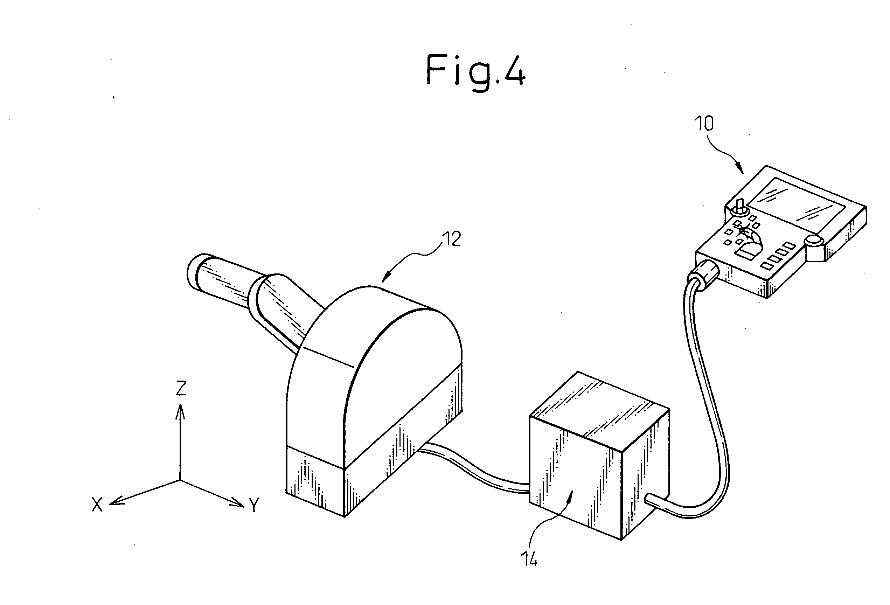

Referring to the drawings, Fig. 4 shows the entire configuration of a robot system including a manual operating unit 10 according to an embodiment of the present invention. The robot system includes a robot mechanical section 12 having three or more degrees of freedom of motion, a robot controller 14 connected to the robot mechanical section 12 and controls the operation of the robot mechanical section 12, and a portable manual operating unit 10 used to operate the robot mechanical section 12 in a manual mode for the purpose of a teaching, a start/stop operation, or the like.

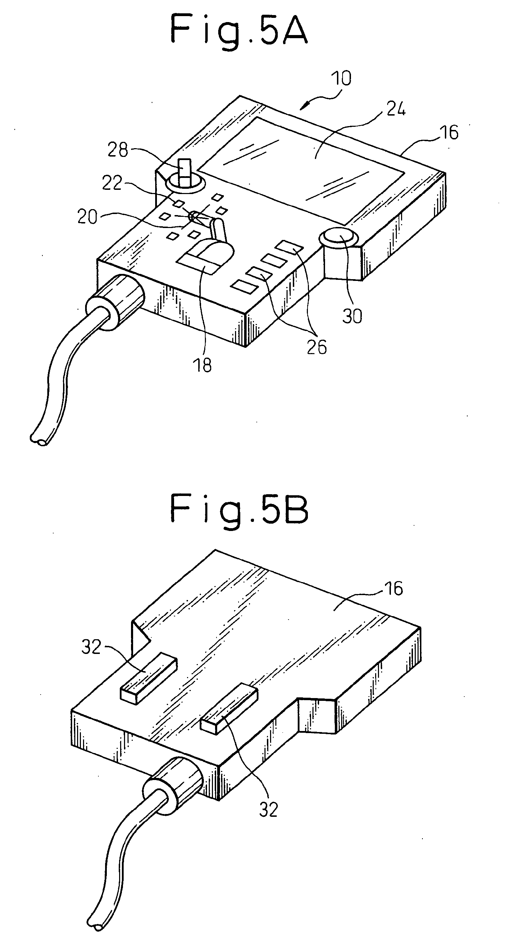

Figs. 5A and 5B show the schematic form of the manual operating unit 10. The manual operating unit 10 includes a housing 16, a robot diagram 18 provided on the housing 16 and schematically showing an external appearance of the robot mechanical section 12, an index 20 provided on the housing 16 in association with the robot diagram 18 and representing a plurality of directions of motions to be performed by the robot mechanical section 12 under control, and a motion command section 22 provided on the housing 16 in association with the index 20 and causing, in a manual mode, the robot mechanical section 12 to perform the motions in the directions represented by the index 20. The manual operation unit 10 is also provided on the front side of the housing 16 (Fig. 5A) with a display section 24, a plurality of operation keys 26, an enable switch 28 and an emergency shutdown switch 30, and on the back side of the housing 16 (Fig. 5B) with a dead man's switch 32. These components 24 to 32 are provided on the housing 16 independently of the robot diagram 18, the index 20 and the motion command section 22, as well as of each other. Also, the manual operating unit may include at least one of the enable switch 28, the emergency shutdown switch 30 and the dead man's switch 32.

The display section 24 includes, for example, a liquid crystal panel, and functions to display the coordinates of a current position of the robot mechanical section 12 on a screen, or to display an operation program and/or the status of an external input/output signal on the screen. The plural operation keys 26 are used for an instruction and data input operation other than the manual mode operation of the robot mechanical section 12, such as for editing a program, for setting an external I/O signal, and so on. The enable switch 28 functions to change the state of the operating function of the manual operating unit 10 as to be valid to invalid and vice versa. The emergency shutdown switch 30 and the dead man's switch 32 respectively function to halt the motion of the robot mechanical section 12 in case of emergency. In this connection, it is also possible to change a system configuration by, e.g., switching an operation mode, so as to use a desired operation key 26 for an input of a motion command to the robot mechanical section 12, as in the conventional manual operating unit 1 already described.

The index 20 and the motion command section 22 are provided in positions closely related to a drawing (a schematic perspective view, in the illustrated embodiment) of the robot mechanical section 12 diagrammatically shown by the robot diagram 18. The motion command section 22 includes a plurality of motion command keys (as described later) respectively function to input a motion command in a desired direction, similar to a coordinate-axis key or a control-axis key in the operation keys 4 (Fig. 2) of the conventional manual operating unit 1 as already described. The index 20 is provided to assist an operator in recognizing the relation between the respective motion command keys and the actual directions of motions of the robot mechanical section 12 when the operator performs an input operation for the motion command keys.

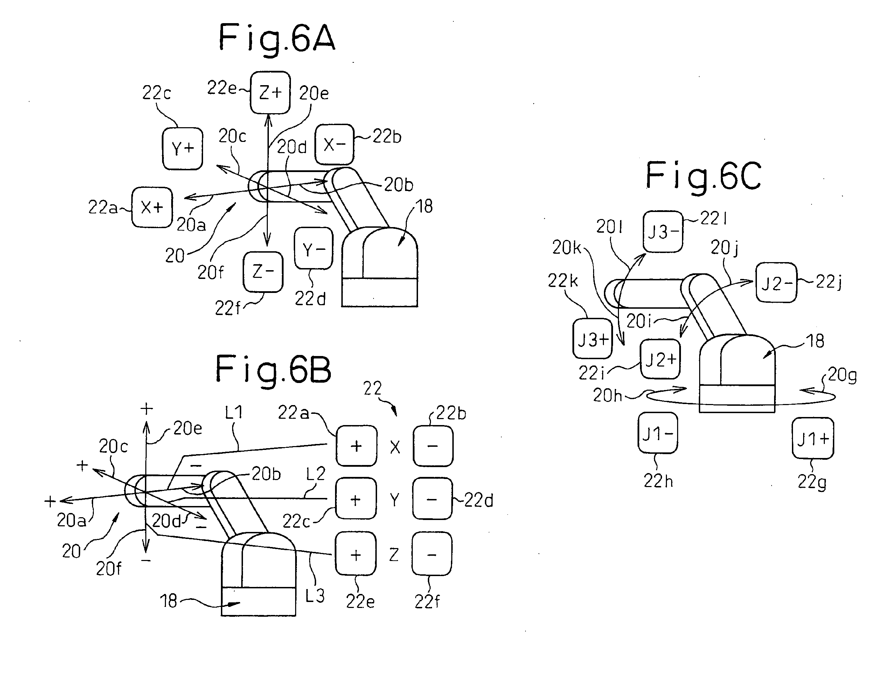

Various examples of the combination of the robot diagram 18, the index 20 and the motion command section 22 (or the motion command keys) will be described below with reference to Figs. 6A to 6C.

In a first example shown in Fig. 6A, the index 20 is comprised of a drawing illustrating three coordinate axes X, Y, Z (Fig. 4) of a three-axes rectangular coordinate system provided for the robot mechanical section 12 (Fig. 4). More specifically, the index 20 is composed of six arrows (i.e., index elements) 20a, 20b, 20c, 20d, 20e, 20f respectively representing six axis directions (+X axis direction, -X axis direction, +Y axis direction, -Y axis direction, +Z axis direction, -Z axis direction) in a three-dimensional rectangular coordinate system having the origin thereof at a predetermined position in an arm distal end in the robot diagram 18. The motion command section 22 includes a plurality of motion command keys 22a, 22b, 22c, 22d, 22e, 22f provided adjacent to and individually corresponding to the arrows 20a to 20f. The motion command keys 22a to 22f have command input functions for causing the robot mechanical section 12 to perform a translational motion in the directions of the corresponding arrows along the three coordinate axes X, Y, Z illustrated by the drawing of the index 20.

In this connection, the three-dimensional rectangular coordinate system illustrated by the index 20 (i.e., a manual-mode effective coordinate system) may be previously provided as one coordinate system (e.g., a robot-base coordinate system set as a world coordinate system for the robot mechanical section 12) specified among plural coordinate systems previously set in the robot system. Alternatively, it may be allowed to suitably change the manual-mode effective coordinate system to another one (e.g., change a robot-base coordinate system to a mechanical interface coordinate system securely set at the distal end of the robot arm, and vice versa) by using the keying operation (e.g., the input operation of a predetermined operation key 32) of the manual operating unit 10.

In the case where one coordinate system is changed to the other as described above, the index 20 as a drawing is not always common to these two coordinate systems. Therefore, it is advantageous to provide, e.g., a red-colored index adapted to be used when a robot-base coordinate system is effective and a blue-colored index adapted to be used when a mechanical interface coordinate system is effective, on the housing 16 in advance, and to selectively use one of these two indexes as occasion demands. In this case, it is possible to display in the display section 24 which coordinate system is currently selected as the manual-mode effective coordinate system.

In the first example as described above, when any one of the plural motion command keys 22a to 22f is operated for input, a corresponding signal is sent from the manual operating unit 10 to the robot controller 14 (Fig. 4), and thereby the robot mechanical section 12 (Fig. 4) operates in a jog-feed motion in the direction represented by the corresponding one of arrows 20a to 20f of the index 20, in the manual-mode effective coordinate system that is presently set. For example, if a robot-base coordinate system is selected as the manual-mode effective coordinate system, the input operation of the motion command key 22a causes the robot mechanical section 12 to operate in a jog-feed motion in a +X axis direction in the robot-base coordinate system, and the input operation of the motion command key 22d causes the robot mechanical section 12 to operate in a jog-feed motion in a -Y axis direction in the robot-base coordinate system. Alternatively, if a mechanical interface coordinate system is selected as the manual-mode effective coordinate system, the input operation of the motion command key 22f causes the robot mechanical section 12 to operate in a jog-feed motion in a -Z axis direction in the mechanical interface coordinate system.

In the first example shown in Fig. 6A, the motion command keys 22a to 22f are respectively located adjacent to the corresponding arrows (or index elements) 20a to 20f of the index 20. Contrary to this, it is possible to modify the locations of the motion command keys 22a to 22f, provided that the correlation between the keys and the arrows is explicitly represented. Fig. 6B shows a second example of combination having such an arrangement.

In the second example shown in Fig. 6B, the correlation between the plural arrows of the index 20 (or index elements) 20a to 20f and the plural motion command keys 22a to 22f is represented by solid line segments L1, L2, L3. Also, + and - signs indicating the directions of the respective coordinate axes are incorporated into the index 20 to be shown as a drawing and further clarify the correlation between the axes and to the motion command keys 22a to 22f. Respective functions of the index 20 and the motion command section 22 are the same as in the first example. For example, the input operation of a "-" key 22b on the right-hand of a character "X" in the motion command section 22 causes the robot mechanical section 12 (Fig. 4) to operate in a jog-feed motion in a -X axis direction in the manual-mode effective coordinate system as presently set.

A third example as shown in Fig. 6C is configured such that a manual-mode operation is performed by designating a control axis in the robot mechanical section 12 (Fig. 4). Thus, the index 20 is comprised of a drawing illustrating the directions of motions in a plurality of control axes J1, J2, J3 provided for the robot mechanical section 12. More specifically, the index 20 is composed of six arrows (i.e., index elements) 20g, 20h, 20i, 20j, 20k, 20l respectively representing, near the J1 axis, J2 axis, J3 axis in the robot diagram 18, normal and reverse directions of rotation in the respective control axes. The motion command section 22 includes a plurality of motion command keys 22g, 22h, 22i, 22j, 22k, 22l provided adjacent to and individually corresponding to the arrows 20g to 20l. The motion command keys 22g to 22l have command input functions for causing the robot mechanical section 12 to perform a motion (a rotational motion, in the illustrated example) in the directions of the corresponding arrows along the three control axes J1, J2, J3 illustrated by the drawing of the index 20.

In the third example as described above, when any one of the plural motion command keys 22g to 22l is operated for input, a corresponding signal is sent from the manual operating unit 10 to the robot controller 14 (Fig. 4) and, thereby, the robot mechanical section 12 (Fig. 4) operates in a jog-feed motion in the direction along the control axis represented by the corresponding one of arrows 20g to 20l of the index 20. For example, the input operation of the motion command key 22g causes the robot mechanical section 12 to operate in a rotational jog-feed motion about the J1 axis in a normal (+) direction, and the input operation of the motion command key 22j causes the robot mechanical section 12 to operate in a rotational jog-feed motion about the J2 axis in a reverse (-) direction.

It should be understood that the above-described three examples are shown merely by way of example, and various modifications may be adopted. For example, two robot diagrams 18 may be provided on the housing 16, and the indexes 20 and the motion command sections 22, having the configurations of the first and third examples as described above, may be provided respectively for the diagrams. According to this arrangement, it is possible to operate both the translational motion in the X axis, Y axis and Z axis directions and the rotational motion about the J1 axis, J2 axis and J3 axis. Also, if the robot mechanical section 12 (Fig. 4) is provided with six control axes in the third example, the index 20 and the motion command section 22 may be provided for the remaining control axes (J4 axis to J6 axis), so as to permit the manual operating unit to operate the normal and reverse rotations about the J1 axis to the J6-axis. Further, if an index representing normal and reverse rotational motions about each of the X axis, Y axis and Z axis of the manual-mode effective coordinate system, as well as a corresponding motion command section are provided, it is possible for the manual operating unit to operate the normal and reverse rotational motions about each of X, Y, Z axes.

As is apparent from the foregoing description, the present invention is capable of solving the problems associated with the prior art, in the manual operating unit for a robot, by providing the robot diagram on the housing, incorporating the index including the index elements such as arrows representing the actual direction of motion into the robot diagram, and providing the motion command section including the motion command keys assigned correspondingly to the respective index elements. Therefore, according to the present invention, it is possible, even for an operator who is not skilled in the manual operation of a robot and who cannot properly image a desired coordinate system in the robot system, to readily recognize the direction of the actual motion of the robot mechanical section, and thus to operate the robot mechanical section with no operating error. Further, a touch panel is not used in an input section, so that it is possible to provide the manual operating unit that is excellent in terms of reliability, durability and economy.

While the invention has been described with reference to specific preferred embodiments, it will be understood by those skilled in the art that various changes and modifications may be made thereto without departing from the spirit and scope of the following claims.

## Claims

1. A manual operating unit (10) for a robot, comprising:
a housing (16);
a robot diagram (18) provided on said housing, said robot diagram schematically showing an external appearance of a robot mechanical section (12);
an index (20) provided on said housing in association with said robot diagram, said index representing a plurality of directions of motions to be performed by the robot mechanical section under control; and
a motion command section (22) provided on said housing in association with said index, said motion command section causing the robot mechanical section to perform said motions in said directions represented by said index.

2. A manual operating unit as set forth in claim 1, wherein said index comprises a drawing (20a - 20f) illustrating three coordinate axes (X, Y, Z) of a three-axis rectangular coordinate system provided for the robot mechanical section; and wherein said motion command section comprises a plurality of motion command keys (22a - 22f) for causing the robot mechanical section to perform said motions along said three coordinate axes illustrated by said drawing.

3. A manual operating unit as set forth in claim 1, wherein said index comprises a drawing (20g - 20l) illustrating directions of motions in a plurality of control axes (J1, J2, J3) provided for the robot mechanical section; and wherein said motion command section comprises a plurality of motion command keys (22g - 22l) for causing the robot mechanical section to perform said motions along said plurality of control axes illustrated by said drawing.

4. A manual operating unit as set forth in claim 1, further comprising a display section (24) provided on said housing independently of said motion command section and an operation key (26) provided on said housing independently of said motion command section and said display section.

5. A manual operating unit as set forth in claim 1, further comprising at least one of an enable switch (28), an emergency shutdown switch (30) and a dead man's switch (32), which are provided on said housing independently of said motion command section.
